# EUROPEAN PATENT SPECIFICATION

(11) **EP 2 617 645 B1**
(45) Date of publication and mention of the grant of the patent: **02.09.2015**
(21) Application number: 11784727.7
(22) Date of filing: 02.09.2011
(51) Int. Cl.: B32B 5/02, B32B 27/28, B32B 3/06, B32B 5/28, B32B 7/08, B64C 1/06, B64C 3/26

(54) **A DIRECTIONALLY STRENGTHENED UNION ARRANGEMENT OF PARTS MADE OUT OF COMPOSITE MATERIALS**
ANORDNUNG ZUR VERBINDUNG VON DIREKTIONAL VERSTÄRKTEN TEILEN AUS EINEM VERBUNDSTOFF
DISPOSITION DE LIAISON DE PIÈCES DE MATÉRIAU COMPOSITE À RENFORT DIRECTIONNEL

(30) Priority: 13.09.2010 ES 201031361 P
(43) Date of publication of application: 24.07.2013
(73) Proprietor: Airbus Operations, S.L., 28906 Getafe Madrid (ES)
(72) Inventor: MARTÍNEZ FERNÁNDEZ, Loreto, E-28043 Madrid (ES); DE LA CRUZ GARCÍA, Oscar, E-28924 Alcorcón Madrid (ES); VERA VILLARES, Enrique, E-28903 Getafe Madrid (ES); DE JULIÁN AGUADO, Antonio, E-28971 Griñón Madrid (ES)
(74) Representative: Elzaburu Marquez, Alberto
(86) International application number: PCT/ES2011/070620
(87) International publication number: WO 2012/035184

(56) References cited:
- EP-A2- 2 305 559
- WO-A1-03/011594
- WO-A1-2010/089578
- WO-A2-2008/109763
- US-A1- 2009 065 644
- US-A1- 2009 084 899

## Description

### FIELD OF THE INVENTION

The present invention refers to an union arrangement of parts made out of composite materials, particularly an union arrangement of parts made out of composite materials which is heavily loaded and belongs to an aeronautical structure, such as shown in WO 2008/109763 which is considered the closest prior art.

### BACKGROUND OF THE INVENTION

Nowadays, particularly in the aeronautical industry, the use of composite materials with an organic matrix and continuous fibres, based mainly on epoxy resins and carbon fibres, in a great variety of structural elements is widely spread.

Aeronautical structures demand, as is well known, the integration of several structural elements. For example, fuselages require the integration of the skin with several structural elements, such as beams, frames and stringers. As opposed to what happened when metallic materials were used, which practically only permitted the use of mechanical unions for the integration of a variety of structural elements in a given component, composite materials allow the possibility of carrying out said integration by chemical unions as well.

The union arrangements of aircraft primary components made out of composite materials, carried out directly or by using intermediate plates, present several problems for achieving an efficient load transmission between said components due to them being heavily loaded.

An example of these problems is considered in US 2009065644 in relation to the union arrangement of the wing skins of an aircraft with a central box, where it is necessary to ensure a good load transmission from the wings to the central box and from the central box to the rest of the structure.

The use of mixed structures (metallic and composite materials) in this kind of union arrangements, particularly the use of intermediate metallic plates ("splice plates") is mentioned in this document.

However, it would be desirable to be able to exclusively use composite material components in this or other types of union arrangements and the present invention is oriented towards the fulfillment of this demand.

### SUMMARY OF THE INVENTION

An object of the present invention is to provide an union arrangement of two or more parts of composite material without using intermediate metallic plates.

Another object of the present invention is to provide an union arrangement of two or more parts of composite material which achieves a gradual and optimized load transmission between the parts.

These and other objects are achieved by a riveted union arrangement between parts made out of a composite material in which, in the area of the union, at least one of the parts is a strengthened directionally part whose lay-up comprises ply packets with the optimum direction for carrying out the load transmission in the union inserted between at least one continuous ply along said union area, where each of those ply packets has a different length, so that said directionally strengthened part be structured in the area of the union in stretches with a different number of ply packets.

In a preferred embodiment, the maximum number of joint plies, with the same or a different direction, in said ply packets is four. Hereby it is achieved an union arrangement using ply packets according to conventional design principles.

In a preferred embodiment, said part has a configuration in steps in the area of the union with stretches of different thickness. Hereby it is achieved an appropriate configuration for certain union arrangements.

In another preferred embodiment, the endings of the ply packets in the area of the union are configured with a minimum slope of 1:20. Hereby it is facilitated the lay-up of parts whose union area has a step-by-step configuration.

In another preferred embodiment, the union arrangement comprises two directionally strengthened parts with the same lay-up structure in the area of the union, including ply packets and continuous plies, but with a different orientation, so that an overlapped union is created between them with an equal total number of ply packets in each stretch of the union. Hereby it is achieved a compensated union arrangement between two parts.

In another preferred embodiment, the union arrangement comprises a directionally strengthened part and a part with constant thickness in the area of the union, being the rivets situated in the stretches of the directionally strengthened part with a different number of ply packets, so that a progressive transmission of the load is carried out. Hereby it is achieved an union arrangement with a progressive transmission of the load between two parts

In another preferred embodiment, the union arrangement comprises a directionally strengthened part and two parts with constant thickness in the area of the union, being the rivets situated in the stretches of the directionally strengthened part with a different number of ply packets, so that a progressive transmission of the load is carried out. Hereby it is achieved an union arrangement with a progressive transmission of the load between three parts.

Other features and advantages of the present invention will be understood from the following detailed description in relation with the enclosed drawings.

### BRIEF DESCRIPTION OF DRAWINGS

Figure 1 is a schematic section side view of a directionally strengthened part with a step-by-step configuration used in union arrangements according to the present invention.
Figure 2 is a schematic section side view of an union arrangement between two directionally strengthened parts according to the present invention.
Figure 3 is a schematic section side view of an union arrangement between a directionally strengthened part and a part with constant thickness according to the present invention.
Figure 4 is a schematic section side view of an union arrangement between a directionally strengthened part and two parts with constant thickness according to the present invention.

### DETAILED DESCRIPTION OF THE INVENTION

The basic idea of the present invention is the utilization of directionally strengthened parts made out of composite material in place of plates made out of metallic materials in union arrangements of parts made out of composite materials, particularly in highly loaded union arrangements of components made out of composite material of, particularly, aeronautic structures.

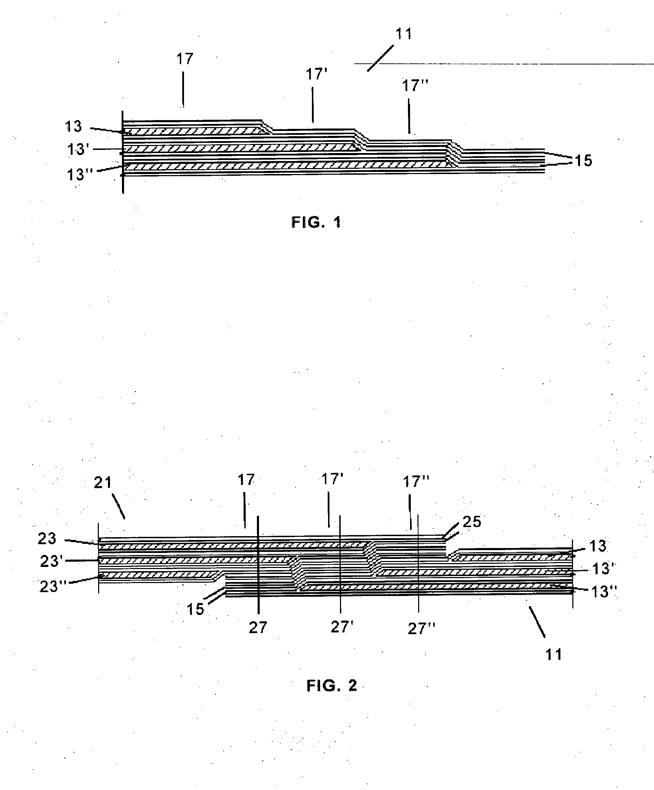

In the preferred embodiment illustrated in Figure 1, the lay-up of the directionally strengthened part 11, configured in steps, comprises three ply packets 13, 13', 13" with different lengths inserted between continuous plies 15, so that three stretches 17, 17', 17" in steps with a different number of ply packets are formed.

The aptitude of said directionally strengthened part 11 to substitute a metallic plate in an union arrangement of parts of composite material is given by two basic characteristics:
- The plies in the ply packets 13, 13', 13" are oriented in the optimum direction for carrying out the load transmission in the union.
- The structure in stretches 17, 17', 17" of different thickness and stiffness facilitates a gradual load transmission.

In a preferred embodiment, four joined plies in the same direction are used in said ply packets 13, 13', 13". It is considered that four is the maximum number of joined plies that shall constitute a packet according to design principles. In another embodiments a lesser number of joined plies in a packet can be used. An optimization of the reinforcement effect can be achieved as a function of the number of joined plies.

In preferred embodiments of a configuration in steps, as is the case with all the illustrated in the Figures, the endings of the ply packets 13, 13', 13" are configured with a minimum slope of 1:20 so as to facilitate the lay-up of the parts.

We will now describe three different union arrangements using directionally strengthened parts.

Figure 2 represents an overlapped union between two directionally strengthened parts 11, 21 (which can be the outer edges of two components of an aeronautical structure) with, respectively, ply packets 13, 13', 13"; 23, 23', 23", inserted between continuous plies 15, 25. With this arrangement, a compensated union between said parts 11, 21 is achieved, as the rivets 27, 27', 27" are located in stretches 17, 17', 17" of the area of the union of the parts 11, 21 which comprise the same number of ply packets: rivet 27 affects the ply packets 23, 23'; rivet 27' affects ply packets 23, 13"; rivet 27" affects ply packets 13', 13".

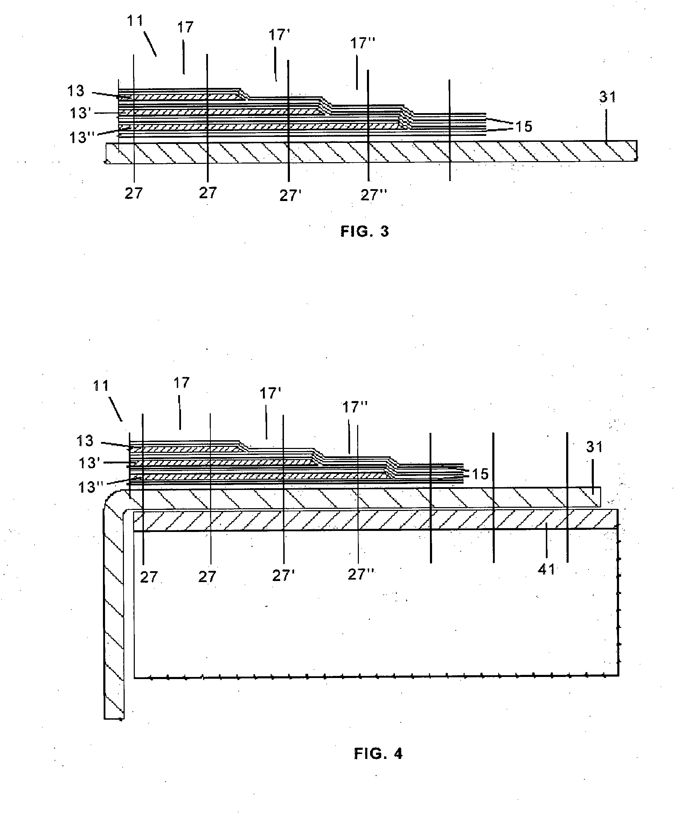

Figure 3 represents an union in steps between a directionally strengthened part 11 and a part with constant thickness 31. This arrangement achieves a gradual load transmission, especially through rivets 27, 27', 27" which respectively affect ply packets 13", 13', 13; 13", 13'; 13".

Figure 4 represents an union in steps between a directionally strengthened part 11 and two parts with constant thickness 31, 41. This arrangement achieves a gradual load transmission, especially through rivets 27, 27', 27" which respectively affect cloth packets 13", 13', 13; 13", 13'; 13".

Among others, the present invention has the following advantages:
- It enables an optimization of the union arrangements for composite material parts by using said directionally strengthened parts with a structurally optimum design for the arrangement of the union being considered.
- It enables an optimization of the load transmission in the union arrangement, avoiding the occurrence of defects in composite material parts.
- It reduces the problems in the union arrangements for parts made out of different materials derived from incompatibilities between them.

Although the present invention has been fully described in connection with preferred embodiments, it is evident that modifications may be introduced within the scope thereof, not considering this as limited by these embodiments, but by the contents of the following claims.

## Claims

1. A riveted union arrangement which comprises at least:
- a first part (11) made out of a composite material;
- a second part (21, 31, 41) made out of a composite material; and
- rivets (27, 27', 27");
**characterized in that**, in the area of the union, at least one of the parts (11) is a strengthened directionally part whose lay-up comprises:
- ply packets (13, 13', 13") with the optimum direction for carrying out the load transmission in the union, said ply packets constituted by joined plies and where each of those ply packets (13, 13', 13") has a different length,
- continuous plies (15) extending along said union area,
- wherein the ply packets (13, 13', 13") are inserted between the continuous plies (15) so that said directionally strengthened part (11) is structured in the area of the union in steps with stretches (17, 17', 17") of different thickness with a different number of ply packets (13, 13', 13").

2. A riveted union arrangement according to claim 1, **characterized in that** the maximum number of plies in said ply packets (13, 13', 13") is four.

3. A riveted union arrangement according to claim 2, **characterized in that** the endings of the ply packets (13, 13', 13") in the area of the union are configured with a minimum slope of 1:20.

4. A riveted union arrangement according to claim 3, **characterized in that** comprises two directionally strengthened parts (11, 21) with the same lay-up structure in the area of the union, including ply packets (13, 13', 13"; 23, 23', 23") and continuous plies (15; 25), but with a different orientation, so that an overlapped union is created between them with an equal total number of ply packets (13', 13"; 13", 23"; 23", 23') in each stretch (17, 17', 17") of the union.

5. A riveted union arrangement according to claim 3, **characterized in that** comprises a directionally strengthened part (11) and a part (31) with constant thickness in the area of the union, being the rivets (27, 27', 27") situated in-the stretches (17, 17', 17") of the directionally strengthened part (11) with a different number of ply packets (13, 13', 13"), so that a progressive transmission of the load is carried out.

6. A riveted union arrangement according to claim 3, **characterized in that** comprises a directionally strengthened part (11) and two parts (31, 41) with constant thickness in the area of the union, being the rivets (27, 27', 27") situated in the stretches (17, 17', 17") of the directionally strengthened part (11) with a different number of ply packets (13, 13', 13"), so that a progressive transmission of the load is carried out.

## Patentansprüche

1. Nietverbindungsanordnung, die wenigstens Folgendes umfasst:
- ein erstes Teil (11) aus einem Verbundstoff;
- ein zweites Teil (21, 31, 41) aus einem Verbundstoff; und
- Nieten (27, 27', 27");
**dadurch gekennzeichnet, dass** im Bereich der Verbindung wenigstens eines der Teile (11) ein direktionales verstärktes Teil ist, dessen Schichtaufbau Folgendes umfasst:
- Lagenpakete (13, 13', 13") mit optimaler Richtung zur Ausführung der Belastungsübertragung in der Verbindung, wobei die Lagenpakete durch miteinander verbundene Lagen gebildet sind und wobei jedes dieser Lagenpakete (13, 13', 13") eine andere Länge aufweist,
- durchgehende Lagen (15), die sich entlang des Verbindungsbereiches erstrecken,
- wobei die Lagenpakete (13, 13', 13") zwischen den durchgehenden Lagen (15) eingefügt sind, so dass der direktional verstärkte Teil (11) im Verbindungsbereich stufenförmig mit Abschnitten (17, 17', 17") unterschiedlicher Dicke mit einer unterschiedlichen Anzahl von Lagenpaketen (13, 13', 13") aufgebaut ist.

2. Nietverbindungsanordnung nach Anspruch 1, **dadurch gekennzeichnet, dass** die maximale Anzahl an Lagen in den Lagenpaketen (13, 13', 13") vier ist.

3. Nietverbindungsanordnung nach Anspruch 2, **dadurch gekennzeichnet, dass** die Enden der Lagenpakete (13, 13', 13") im Verbindungsbereich mit einer Neigung von mindestens 1:20 aufgebaut ist.

4. Nietverbindungsanordnung nach Anspruch 3, **dadurch gekennzeichnet, dass** sie zwei direktional verstärkte Teile (11, 21) mit der gleichen Schichtaufbaustruktur im Verbindungsbereich aufweist, die Lagenpakete (13, 13', 13"; 23, 23', 23") und durchgehende Lagen (15; 25) umfasst, die jedoch eine unterschiedliche Ausrichtung aufweisen, so dass zwischen ihnen eine überlappende Verbindung gebildet wird, wobei sich in jeder Strecke (17, 17', 17") der Verbindung die gleiche Gesamtanzahl an Lagenpaketen (13', 13"; 13", 23"; 23", 23') befindet.

5. Nietverbindungsanordnung nach Anspruch 3, **dadurch gekennzeichnet, dass** sie im Verbindungsbereich einen direktional verstärkten Teil (11) und einen Teil (31) mit konstanter Dicke umfasst, wobei die Nieten (27, 27', 27") in den Abschnitten (17, 17', 17") des direktional verstärkten Teils (11) mit einer unterschiedlichen Anzahl an Lagenpaketen (13, 13', 13") angeordnet sind, so dass eine progressive Übertragung der Belastung durchgeführt wird.

6. Nietverbindungsanordnung nach Anspruch 3, **dadurch gekennzeichnet, dass** sie im Verbindungsbereich einen direktional verstärkten Teil (11) und zwei Teile (31, 41) mit konstanter Dicke umfasst, wobei die Nieten (27, 27', 27") in den Abschnitten (17, 17', 17") des direktional verstärkten Teils (11) mit einer unterschiedlichen Anzahl an Lagenpaketen (13, 13', 13") angeordnet sind, so dass eine progressive Übertragung der Belastung durchgeführt wird.

## Revendications

1. Agencement de liaison riveté qui comprend au moins :
- une première pièce (11) constituée d'un matériau composite ;
- une seconde pièce (21, 31, 41) constituée d'un matériau composite ; et
- des rivets (27, 27', 27") ;
**caractérisé en ce que**, dans la zone de la liaison, au moins une des pièces (11) est une pièce à renfort directionnel dont la structure de superposition comprend :
- des paquets de couches (13, 13', 13") ayant la direction optimale pour assurer la transmission de charge dans la liaison, lesdits paquets de couches étant constitués par des couches assemblées et où chacun de ces paquets de couches (13, 13', 13") a une longueur différente,
- des couches continues (15) s'étendant le long de ladite zone de liaison,
- dans lequel les paquets de couches (13, 13', 13") sont insérés entre les couches continues (15) de sorte que ladite pièce à renfort directionnel (11) soit structurée dans la zone de la liaison en phase avec des extensions (17, 17', 17") d'épaisseur différente ayant un nombre différent de paquets de couches (13, 13', 13").

2. Agencement de liaison riveté selon la revendication 1, **caractérisé en ce que** le nombre maximal de couches dans lesdits paquets de couches (13, 13', 13") est de quatre.

3. Agencement de liaison riveté selon la revendication 2, **caractérisé en ce que** les extrémités des paquets de couches (13, 13', 13") dans la zone de la liaison sont configurées avec une pente minimale de 1:20.

4. Agencement de liaison riveté selon la revendication 3, **caractérisé en ce qu'**il comprend deux pièces à renfort directionnel (11, 21) ayant la même structure de superposition dans la zone de la liaison, incluant des paquets de couches (13, 13', 13" ; 23, 23', 23") et des couches continues (15 ; 25), mais ayant une orientation différente, de sorte qu'une liaison est créée entre elles avec un nombre égal total de paquets de couches (13, 13', 13" ; 23, 23', 23") dans chaque extension (17, 17', 17") de la liaison.

5. Agencement de liaison riveté selon la revendication 3, **caractérisé en ce qu'**il comprend une pièce à renfort directionnel (11) et une pièce (31) ayant une épaisseur constante dans la zone de la liaison, les iivets (27, 27', 27") étant situés dans les extensions (17, 17', 17") de la pièce à renfort directionnel (11) ayant un nombre différent de paquets de couches (13, 13', 13"), de sorte qu'une transmission progressive de la charge est assurée.

6. Agencement de liaison riveté selon la revendication 3, **caractérisé en ce qu'**il comprend une pièce à renfort directionnel (11) et deux pièces (31, 41) ayant une épaisseur constante dans la zone de la liaison, les rivets (27, 27', 27") étant situés dans les extensions (17, 17', 17") de la pièce à renfort directionnel (11) ayant un nombre différent de paquets de couches (13, 13', 13"), de sorte qu'une transmission progressive de la charge est assurée.
